# EUROPÄISCHE PATENTSCHRIFT

(11) **EP 2 643 224 B1**
(45) Veröffentlichungstag und Bekanntmachung des Hinweises auf die Patenterteilung: **17.09.2014**
(21) Anmeldenummer: 12705056.5
(22) Anmeldetag: 14.02.2012
(51) Int. Cl.: B65B 35/06, B65G 47/66, B65G 47/82, B07C 5/36, B65B 5/04

(54) **VERPACKUNGSMASCHINE MIT AUSWURFVORRICHTUNG**
PACKAGING MACHINE HAVING AN EJECTION DEVICE
MACHINE D'EMBALLAGE DOTEE D'UN DISPOSITIF D'EJECTION

(30) Priorität: 18.02.2011 DE 102011011642
(43) Veröffentlichungstag der Anmeldung: 02.10.2013
(73) Patentinhaber: IWK Verpackungstechnik GmbH, 76297 Stutensee (DE)
(72) Erfinder: SPECK, Markus, 76646 Bruchsal (DE)
(74) Vertreter: Lasch, Hartmut
(86) Internationale Anmeldenummer: PCT/EP2012/000635
(87) Internationale Veröffentlichungsnummer: WO 2012/110225

(56) Entgegenhaltungen:
- EP-A1- 1 894 863
- EP-A2- 1 015 362
- DE-A1- 2 710 040
- GB-A- 1 307 031

## Beschreibung

Die Erfindung betrifft eine Verpackungsmaschine, in der Produkte in einer Reihe längs einer vorbestimmten Transportfläche bewegbar sind, mit einer Auswurfvorrichtung, in der ein vorbestimmtes Produkt aus der Reihe entfernbar ist, wobei die Auswurfvorrichtung zumindest ein Bodenteil aufweist, das zwischen einer Funktionsstellung, in der das Bodenteil einen Abschnitt der Transportfläche bildet, und einer Freigabestellung verstellbar ist, in der das Bodenteil aus der Transportfläche herausbewegt ist. Derartige Verpackungsmaschinen sind z.B. aus der EP 1015362 bekannt.

In einer Verpackungsmaschine wird eine Ware mit einer Verpackung und/oder einer Umverpackung versehen. Im Folgenden soll beispielhaft von einer Kartoniermaschine ausgegangen werden, in der eine Ware in eine Faltschachtel eingeschoben und mit dieser zu weiteren Arbeitsstationen transportiert wird. Die Erfindung ist jedoch nicht auf eine Kartoniermaschine beschränkt und kann bei allen Verpackungsmaschinen Anwendung finden, bei denen die Produkte in einer Reihe längs einer vorbestimmten Transportbahn oder -fläche bewegt werden.

In einer Verpackungsmaschine werden die Produkte daraufhin überprüft, ob sie gewisse Anforderungen erfüllen. Wenn ein Produkt eine dieser Anforderungen nicht erfüllt, wird es als sogenanntes "Schlecht-Produkt" eingestuft und muss aus der Produktreihe entfernt werden. Dies kann entweder dadurch geschehen, dass das Produkt manuell oder beispielsweise mit einem Roboter von oben aus der Reihe herausgehoben wird, alternativ ist es jedoch auch bekannt, das Schlecht-Produkt nach unten aus der im wesentlichen horizontal transportierten Reihe von Produkten auszuscheiden. Zu diesem Zweck ist zwischen einer 1. Fördervorrichtung und einer 2. Fördervorrichtung eine Lücke vorgesehen, in der eine Bodenklappe angeordnet ist. Wenn die Bodenklappe geschlossen ist, wird das Produkt über die Oberfläche der Bodenklappe von der 1. Fordervorrichtung an die weiterführende 2. Fördervorrichtung übergeben. Wenn ein Produkt ausgeschieden werden soll, wird die Bodenklappe geoffnet, so dass das in diesem Moment oberhalb der Bodenklappe befindliche Produkt durch die von der Bodenklappe gebildete Öffnung nach unten fällt. Anschließend wird die Klappe unverzüglich wieder geschlossen, um das nächste Produkt sicher an die weiterführende 2. Fordervorrichtung zu übergeben.

Es ist auch bekannt, statt einer schwenkbaren Bodenklappe eine verschiebliche Bodenplatte zu verwenden, die im Bedarfsfall seitlich aus der Transportfläche herausgezogen wird, so dass das Produkt nach unten fällt, woraufhin die Bodenplatte wieder in die Transportfläche eingeschoben und somit die Lücke geschlossen wird.

Alle genannten Vorgehensweisen zum Ausscheiden oder Auswerfen eines Schlecht-Produktes weisen den Nachteil auf, dass die jeweilige Zykluszeit, d.h. die Zeit, die gebraucht wird, um ein Schlecht-Produkt auszuscheiden und anschließend die Transportfläche wieder herzustellen, sehr lang ist, wodurch die Leistung der Verpackungsmaschine beschränkt ist. Darüber hinaus werden sowohl bei der schwenkbaren Bodenklappe als auch bei der verschieblichen Bodenplatte relativ große Massen bewegt, was zu ungleichmäßigen Bewegungen und hohen Belastungen der Bauteile führt.

Der Erfindung liegt die Aufgabe zugrunde, eine Verpackungsmaschine mit einer Auswurfvorrichtung der genannten Art zu Schaffen, mit der sich in zuverlässiger Weise sehr kurze Zykluszeiten erzielen lassen.

Diese Aufgabe wird erfindungsgemäß durch eine Verpackungsmaschine mit einer Auswurfvorrichtung mit den Merkmalen des Anspruchs 1 gelöst. Dabei ist vorgesehen, dass das Bodenteil eine drehangetriebene Scheibe mit einen rotationsasymmetrischen Querschnitt ist, die um eine Drehachse drehbar gelagert ist, und dass oberhalb der Lücke eine Schubvorrichtung angeordnet ist, mittels der auf ein darunter liegendes Produkt eine in die Lücke gerichtete Kraft aufbringbar ist.

Dabei ist erfindungsgemäß vorzugsweise vorgesehen, dass die Transportbahn oder -fläche eine 1. Fördervorrichtung und eine daran anschließende 2. Fördervorrichtung umfasst, wobei zwischen den Fördervorrichtungen eine Lücke gebildet ist, in der die zumindest eine Scheibe zumindest abschnittsweise angeordnet ist.

In ihrer Funktionsstellung ragt die Scheibe derart in die Lücke zwischen den Fördervorrichtungen hinein, dass das Produkt von der 1. Fördervorrichtung über die Scheibe zu der 2. Fördervorrichtung übergeben werden kann. Dabei kann das Produkt entweder über die ruhende Scheibe gleiten, alternativ ist es jedoch auch möglich, dass die Scheibe sich auch bei der Übergabe eines Produktes dreht und dadurch die Übergabe unterstützt, womit der weitere Vorteil gegeben ist, dass zwischen dem Produkt und der Scheibe eine geringere Relativbewegung stattfindet, so dass die Gefahr der Beschädigung des Produktes herabgesetzt ist.

Wenn ein Schlecht-Produkt ausgeschieden oder ausgeworfen werden soll, dreht sich die Scheibe in eine Freigabestellung, in der sie aus der Transportfläche bzw. der Lücke zwischen den beiden Fördervorrichtungen soweit heraus bewegt ist, dass das Produkt durch die Lücke nach unten herunterfallen kann.

Mit der Drehung einer Scheibe lassen sich sehr schnelle Bewegungen erzielen, so dass die Zykluszeit gegenüber den vorbekannten Bodenteilen wesentlich herabgesetzt ist.

Um ein Schlecht-Produkt aus der Reihe der Produkte zu entfernen, wird die Scheibe in ihre Freigabestellung gedreht, in der zwischen der 1. Fördervorrichtung und der weiterführenden 2. Fördervorrichtung eine zumindest so große Lücke gebildet ist, dass das Schlecht-Produkt durch die Lücke nach unten fallen kann. Dabei ist vorgesehen, dass oberhalb der Lücke eine Schubvorrichtung angeordnet ist, mittels der auf ein darunter angeordnetes Produkt und insbesondere ein auszuscheidendes Schlecht-Produkt eine in die Lücke gerichtete Kraft aufbringbar ist. Die Schubvorrichtung stellt einerseits sicher, dass das Schlecht-Produkt durch die Lücke nach unten ausgeschieden wird, und verhindert andererseits, dass das Schlechtprodukt irrtümlicherweise auf die weiterführende 2. Fördervorrichtung gelangt und somit in der Produktreihe verbleibt.

In bevorzugter Ausgestaltung der Erfindung ist vorgesehen, dass zwei Scheiben auf Abstand nebeneinander angeordnet sind, die von entegegengesetzten Seiten in die Transportfläche bzw. in die zwischen den Fördervorrichtungen gebildete Lücke eingreifen. Aufgrund der Verwendung von zwei Scheiben können diese jeweils relativ klein und kompakt ausgebildet sein, wodurch sie einerseits einen nur geringen Bauraum erfordern und andererseits sehr schnell gedreht werden können.

Die Scheiben sollten in ihren Drehbewegungen synchronisiert sein. Dazu kann einerseits vorgesehen sein, dass für die Scheiben eine gemeinsame Antriebsvorrichtung vorgesehen ist, alternativ ist es jedoch auch möglich, jeder Scheibe eine eigene Antriebsvorrichtung, insbesondere einen Servomotor, zuzuordnen und die Antriebsvorrichtungen mittels ei-, ner elektronischen Steuerung zu synchronisieren.

Jede Scheibe ist vorzugsweise einsinnig bzw. unidirektional drehangetrieben, d.h. sie wird nur in eine Richtung gedreht und nicht hin und her bewegt. Wenn zwei Scheiben auf entgegengesetzten Seiten der Lücke angeordnet sind, drehen die beiden Scheiben relativ zueinander gegensinnig. Dabei ist die Drehung jeder Scheibe vorzugsweise so ausgerichtet, dass das in die Lücke eingreifende Ende der Scheibe sich in Transportrichtung bewegt.

In ihrer Funktionsstellung bildet die Oberfläche der Scheibe bzw. der Scheiben einen Teil der Transportfläche, wobei die Oberfläche vorzugsweise in einer Ebene mit der Transportfläche der 1. Fördervorrichtung und/oder der Transportfläche der 2. Fördervorrichtung liegt. Die Drehachse der Scheibe verläuft vorzugsweise normal zu derjenigen Oberfläche der Scheibe, die ein Abschnitt der Transportbahn bildet, d.h. normal zu der Transportfläche, über die die Produkte bewegt werden.

Als besonders vorteilhaft hat es sich erwiesen, wenn die Scheibe nahe der Drehachse einen Basisabschnitt aufweist, an den sich zumindest ein sich fächerartig radial nach außen erweiternder Abschnitt anschließt. Es können auch mehrere entsprechende fächerartige Abschnitte über den Umfang des Basisabschnitts verteilt angeordnet sein. Vorteilhafterweise ist vorgesehen, dass die Scheibe zwei fächerartige Abschnitte auf entgegengesetzten Seiten des Basisabschnitts besitzt.

In bevorzugter Ausgestaltung der Erfindung ist vorgesehen, dass die Schubvorrichtung zumindest eine drehbar gelagerte Schubplatte und insbesondere zumindest zwei auf Abstand parallel nebeneinander angeordnete Schubplatten umfasst. Die Schubplatten sind im wesentlichen vertikal ausgerichtet, d.h. ihre Plattenebene verläuft senkrecht zu der Transportfläche, auf der die Produkte transportiert werden. Die Schubplatte oder Schubplatten sind vorzugsweise um eine Achse drehbar, die senkrecht zur Transportrichtung der Produkte und senkrecht zu der Drehachse der Scheibe verläuft. Die Drehung ist dabei vorzugsweise so ausgerichtet, dass das zum Produkt weisende untere Ende der Schubplatte oder Schubplatten in Transportrichtung der Produkte bewegt wird. Bei Anordnung mehrere Schubplatten sollten diese auf einer gemeinsamen Welle sitzen und von einer gemeinsamen Antriebsvorrichtung, beispielsweise einem Servomotor angetrieben sein.

Um zu vermeiden, dass sich die Schubplatte mit einem Produkt verhakt oder auf dieses eine hohe punktuelle Last aufbringt, ist erfindungsgemäß in Weiterbildung der Erfindung vorgesehen, dass die Schubplatte abgerundet ist und insbesondere eine elliptische Form besitzt.

Wenn die Scheibe bzw. Scheiben in ihrer Funktionsstellung, in der sie die Lücke zwischen den Fördervorrichtungen überbrücken, still stehen, muss auf das von der 1. Fördervorrichtung auf die Scheibe bzw. Scheiben gelangende Produkte ein Schubkraft aufgebracht werden, um es zu der weiterführenden 2. Fördervorrichtung zu schieben. Die Aufbringung dieser Schubkraft kann durch die Schubplatte bzw. Schubplatten erreicht werden.

Alternativ ist es möglich, die Scheibe oder Scheiben in ihrer Funktionsstellung ebenfalls zu drehen, so dass auf das auf der Scheibe oder den Scheiben aufliegende Produkt aufgrund der Reibung mit der Oberfläche der Scheibe oder Scheiben eine zu der weiterführenden 2. Fördervorrichtung gerichtete Kraft aufgebracht werden kann.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine Auswurfvorrichtung in einer Verpackungsmaschine zu Beginn eines Zyklus eines Produktauswurfs,
- Fig. 2: eine Aufsicht auf die Auswurfvorrichtung gemäß Figur 1,
- Fig. 3: die Auswurfvorrichtung gemäß Figur 1 in einer 1. Phase des Auswurf-Zyklus,
- Fig. 4: eine Aufsicht auf die Auswurfvorrichtung gemäß Figur 3,
- Fig. 5: die Auswurfvorrichtung gemäß Figur 1 in einer 2. Phase des Auswurf-Zyklus,
- Fig. 6: eine Aufsicht auf die Auswurfvorrichtung gemäß Figur 5,
- Fig. 7: die Auswurfvorrichtung gemäß Figur 1 in einer 3. Phase des Auswurf-Zyklus,
- Fig. 8: eine Aufsicht auf die Auswurfvorrichtung gemäß Figur 7,
- Fig. 9: die Auswurfvorrichtung gemäß Figur 1 in einer 4. Phase des Auswurf-Zyklus,
- Fig. 10: eine Aufsicht auf die Auswurfvorrichtung gemäß Figur 9,
- Fig. 11: die Auswurfvorrichtung gemäß Figur 1 in einer 5. Phase des Auswurf-Zyklus,
- Fig. 12: eine Aufsicht auf die Auswurfvorrichtung gemäß Figur 11,
- Fig. 13: die Auswurfvorrichtung gemäß Figur 1 in einer 6. Phase des Auswurf-Zyklus,
- Fig. 14: eine Aufsicht auf die Auswurfvorrichtung gemäß Figur 13,
- Fig. 15: die Auswurfvorrichtung gemäß Figur 1 bei Übergabe eines Produktes an die weiterführende Fördervorrichtung und
- Fig. 16: eine Aufsicht auf die Auswurfvorrichtung gemäß Figur 15.

Die Figuren zeigen einen Ausschnitt aus einer Verpackungsmaschine mit einer Auswurfvorrichtung 10. Auf einer 1. Fördervorrichtung 13, bei der es sich um einen Bandförderer oder einen sonstigen linearen Förderer handeln kann, werden mehrere Produkte P, P' in einer Reihe in gegenseitigem Abstand der Auswurfvorrichtung 10 in Transportrichtung T zugeführt. Als Produkte P, P' sind Faltschachteln dargestellt, jedoch sind auch andere Produkte denkbar. Am Ende der 1. Fördervorrichtung 13 ist die Auswurfvorrichtung 10 angeordnet, an die sich eine 2. weiterführende Fördervorrichtung 14 vorzugsweise gleicher Bauart anschließt. Zwischen der 1. Fördervorrichtung 13 und der 2. Fördervorrichtung 14 ist eine Lücke 15 vorgesehen, die ausreichend groß ist, so dass ein Produkt P, P' durch die Lücke 15 nach unten herausfallen kann.

Im Bereich der Lücke 15 ist auf jeder Seite der Fördervorrichtungen 13 und 14 jeweils ein Bodenteil 11 in Form einer drehangetriebenen Scheibe 12 vorgesehen, deren Oberflächen mit den Transportebenen oder -flächen der Fördervorrichtungen 13 und 14 in einer Ebene liegen. Die Scheiben 12 sind jeweils um eine Drehachse 19 drehbar, die normal zur Transportfläche der Fördervorrichtungen 13 und 14 sowie normal zu derjenigen Oberfläche der Scheibe 12 verläuft, die einen Abschnitt der Transportfläche bildet.

Jede Scheibe 12 besitzt nahe der Drehachse 19 einen Basisabschnitt 12a, an den sich auf diametral entgegengesetzten Seiten jeweils ein fächerartig radial nach außen erweiternder Abschnitt 12b anschließt.

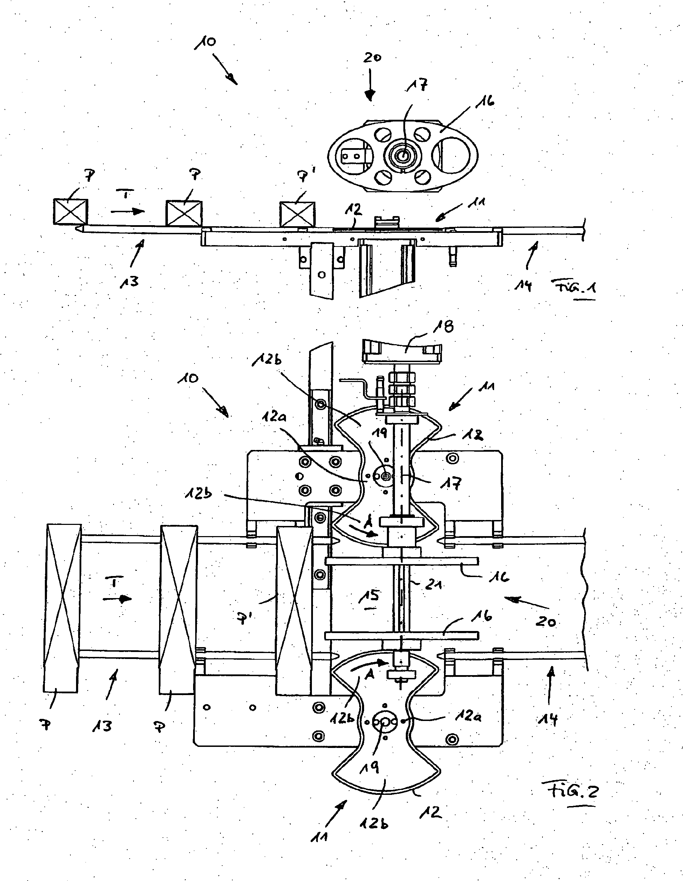

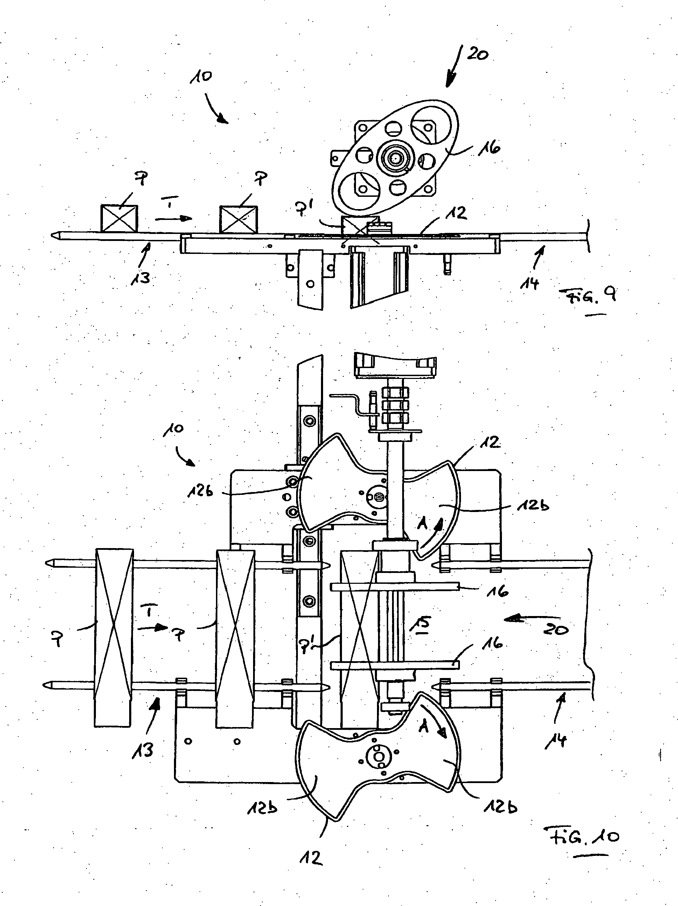

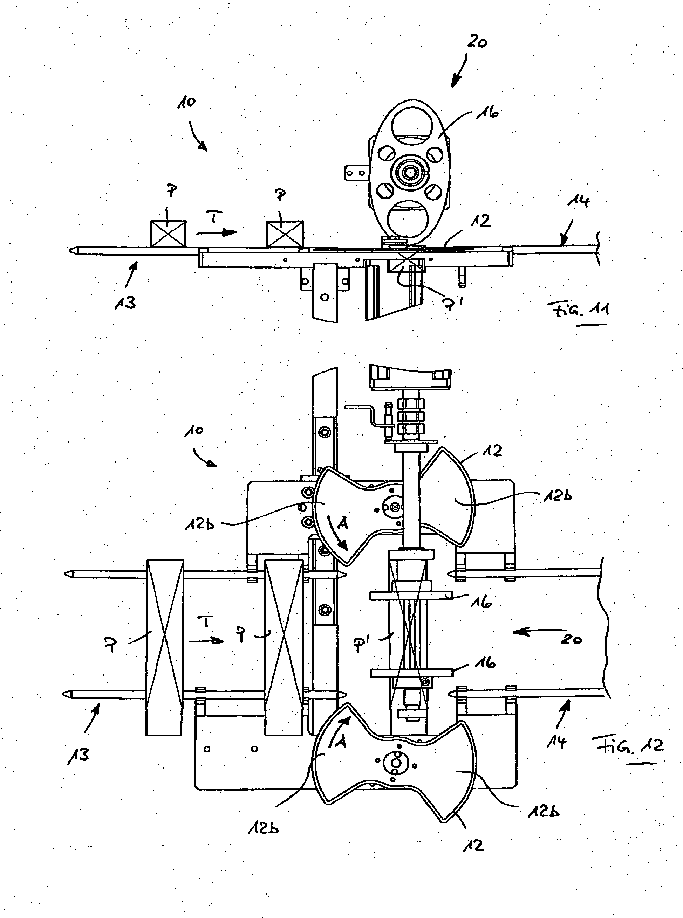

Figur 2 zeigt die Scheiben 12 in ihrer Funktionsstellung, in der sie jeweils mit ihrem der Lücke 15 zugewandten fächerartigen Abschnitt 12b soweit in die Lücke 15 eingreifen, dass die Lücke 15 soweit abgedeckt ist, dass ein Produkt P, P' nicht durch die Lücke nach unten hindurch fallen kann. Wenn die Scheiben 12 jeweils um ca. 90° gedreht sind (siehe Figuren 10 und 12), sind die beiden fächerartigen Abschnitte 12b jeder Scheibe 12 seitlich neben der Lücke 15 angeordnet und greifen nicht in diese hinein. Somit ist die Lücke 15 groß genug, dass ein Produkt P. P' nach unten durch die Lücke 15 hindurch fallen kann.

Die Scheiben 12 sind in ihren Drehbewegungen synchronisiert und vorzugsweise jeweils mit eigenen Antriebsvorrichtungen in Form eines Servomotors ausgerüstet. Jede Scheibe 12 ist einsinnig bzw. unidirektional drehangetrieben, d.h. sie wird in nur eine Richtung gedreht und nicht hin und her bewegt. Die Scheiben 12 drehen relativ zueinander gegensinnig, wobei die Drehung jeder Scheibe 12 so ausgerichtet ist, dass das in die Lücke 15 eingreifende Ende der Scheibe 12 sich in Transportrichtung T der Produkte bewegt, wie es durch die Pfeile A in den Figuren angedeutet ist.

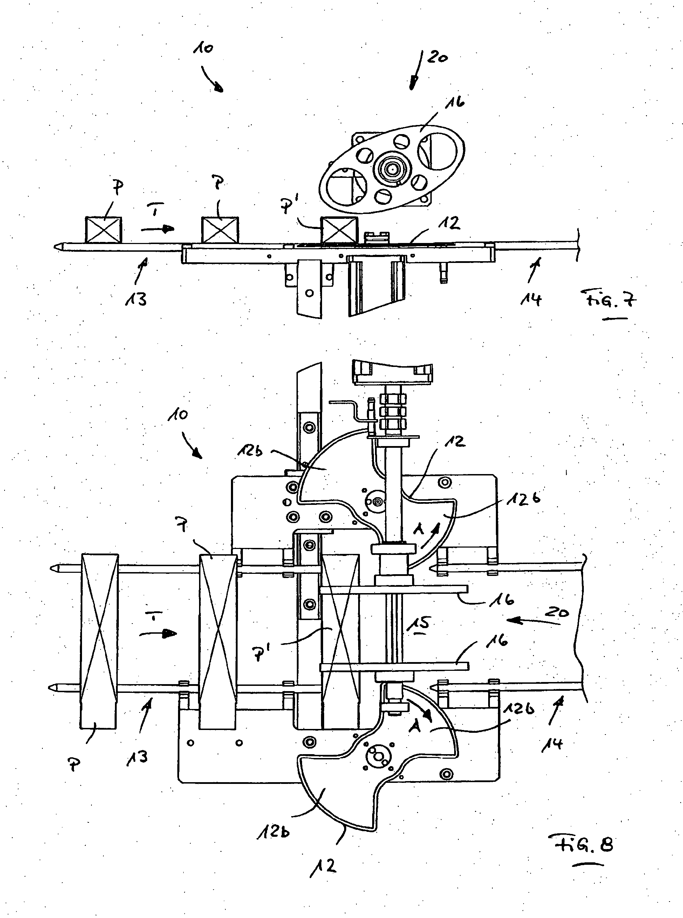

Oberhalb der Lücke 15 im Abstand zu dieser ist eine Schubvorrichtung 20 angeordnet, die die Aufgabe hat, ein Schlecht-Produkt P', das durch die Lücke 15 nach unten ausgeschieden werden soll, zuverlässig in die Lücke 15 hineinzudrücken. Die Schubvorrichtung 20 umfasst eine Welle 21, die von einer Antriebsvorrichtung 18 in Drehung versetzt wird und deren Drehachse 17 senkrecht zur Zeichenebene in Figur 1, d.h. senkrecht zur Transportrichtung T der Produkte P und senkrecht zu der Drehachse 19 der Scheiben 12 verläuft. Auf der Welle 21 sind oberhalb der Lücke 15 zwei Schubplatten 16 angeordnet, die eine elliptische Form besitzen, sich in Transportrichtung T erstrecken und deren Plattenebene senkrecht zur Transportfläche der Fördervorrichtungen 13 und 14 ausgerichtet ist. Wenn sich die elliptischen Schubplatten 16 in der in Figur 1 dargestellten Stellung befinden, in der die längere Hauptachse der Ellipse parallel zur Transportrichtung T verläuft, ist der Abstand zwischen der Unterkante der Schubplatten 16 und der Oberseite der Scheiben 12 so groß, dass das Produkt P, P' unterhalb der Schubplatten 16 hindurchbewegt werden kann. Die Drehung der Schubplatten 16 ist so ausgerichtet, dass das zum Produkt P, P' weisende untere Ende der Schubplatten 16 in Transportrichtung T bewegt wird, wie es in der Abfolge der Figuren 7, 9, 11 und 13 ersichtlich ist.

Im Folgenden soll anhand der Figuren der Vorgang des Ausscheidens eines Schlecht-Produktes P' im Einzelnen erläuterte werden.

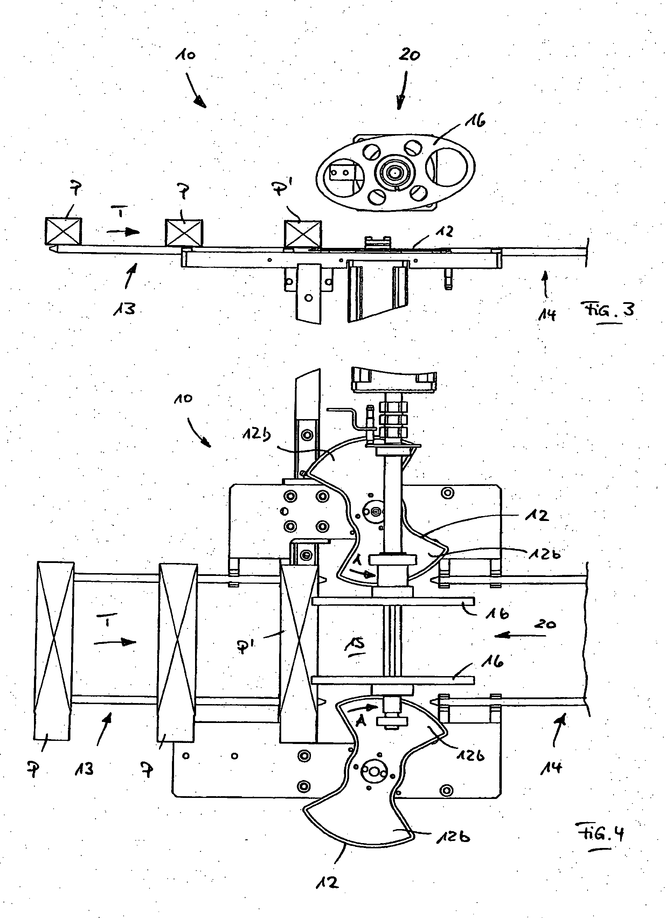

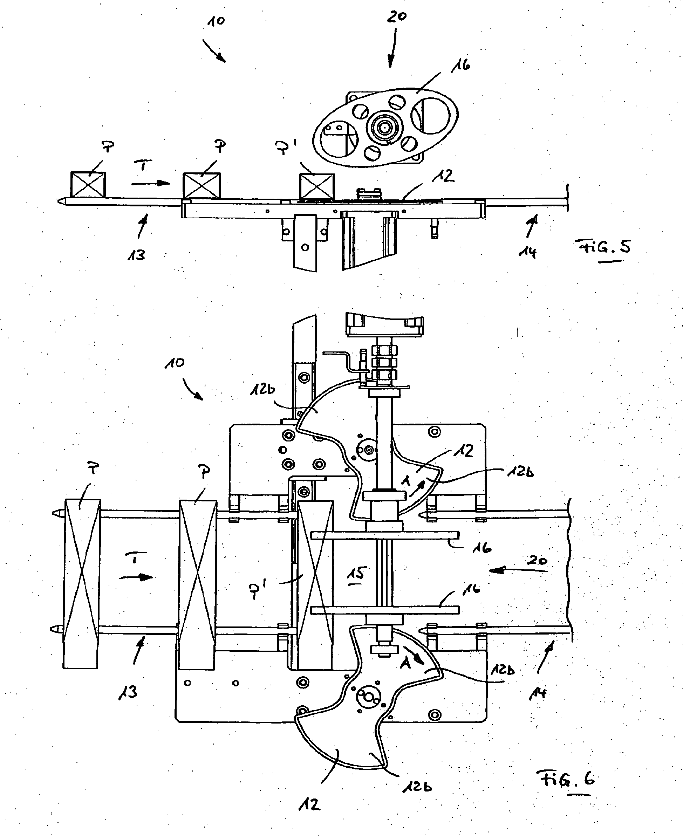

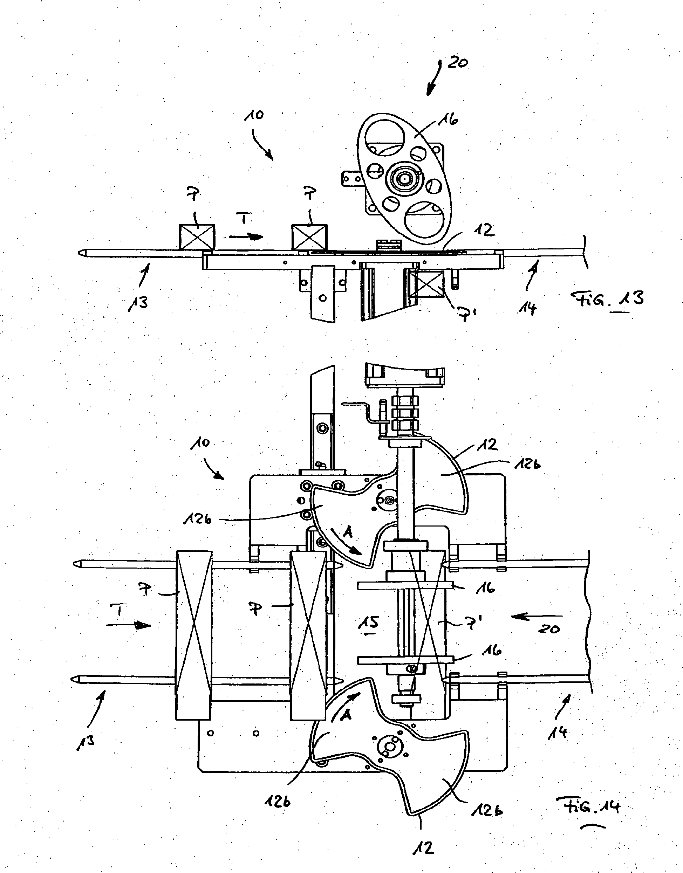

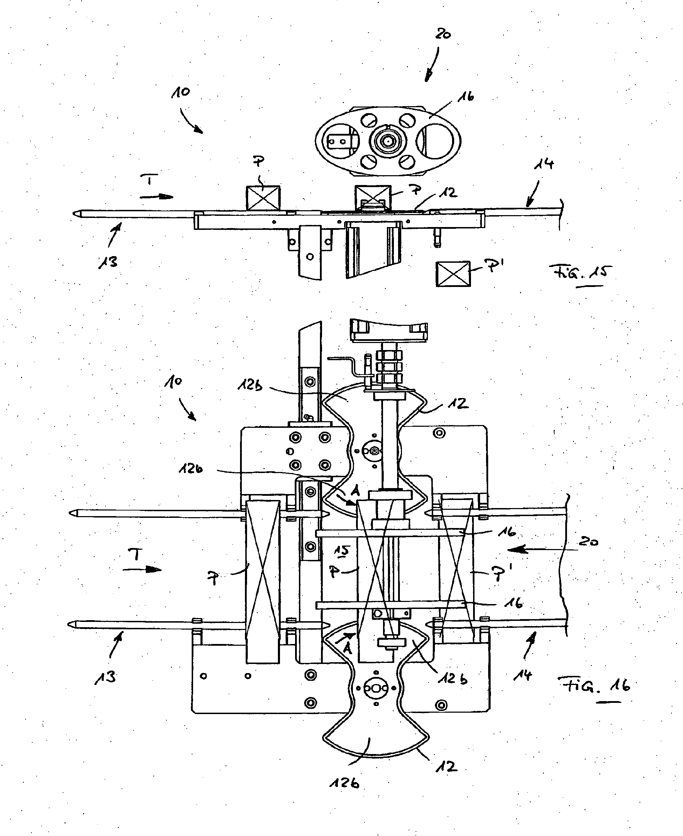

Die Figuren 1 und 2 zeigen den Ausgangszustand, in dem das auszuwerfende Schlecht-Produkt P' am Ende der 1. Fördervorrichtung 13 steht. Die Scheiben 12 stehen jeweils noch in ihrer Funktionsstellung, d.h. sie greifen mit ihren einander zugewandten fächerförmigen Abschnitten 12b in die Lücke 15 hinein. Die Schubplatten 16 sind so ausgerichtet, dass die längere Hauptachse der Ellipse in Transportrichtung T weist. Ausgehend von diesem Zustand bekommt die Auswurfvorrichtung 10 von der Steuerung der Verpackungsmaschine das Signal, das Schlecht-Produkt P' auszuscheiden. Zu diesem Zweck werden die Scheiben 12 gegenläufig in Drehung versetzt, wobei die bislang in die Lücke 15 eingreifenden fächerartigen Abschnitte 12b der Scheiben 12 in Richtung der weiterführenden Fördervorrichtung 14 aus der Lücke 15 herausgeschwenkt werden (siehe Figuren 4, 6, 8 und 10). Gleichzeitig werden die Schubplatten 16 in Drehung versetzt. Die Drehung der Schubplatten 16 ist mit der Transportbewegung des Schlecht-Produktes P' so koordiniert, dass die Schubplatten 16 mit der Oberseite des SchlechtProduktes P' in Anlage kommen, sobald dieses die 1. Fördervorrichtung 13 verlassen hat und sich oberhalb der Lücke 15 befindet. In diesem Zustand (siehe Figur 9) drücken die Schubplatten 16 das Schlecht-Produkt P' nach unten in die Lücke 15 (Figuren 9 und 11), so dass das Schlecht-Produkt P' durch die Lücke 15 nach unten ausgeworfen oder ausgeschieden wird (siehe Figuren 13 und 15). Üblicherweise wird das Schlecht-Produkt P' entweder in einem Behälter gesammelt oder aus der Verpackungsmaschine abgeführt.

Die Schubplatten 16 drehen weiter, bis sie wieder ihre Ausgangsstellung (Figur 15) erreicht haben, in der ein Produkt P, das nicht ausgeschieden werden soll, unterhalb der Schubplatten 16 hindurchtransportiert werden kann.

Durch Drehung der Scheiben 12 wurde die Lücke 15 soweit geöffnet, dass das Schlecht-Produkt P' durch die Lücke 15 hindurch fallen konnte. Bei weiterer Drehung der Scheiben 12 wird die Lücke wieder verkleinert, indem nunmehr die jeweils anderen fächerartigen Abschnitte 12b der Scheiben 12 in die Lücke 15 eingreifen (siehe Figuren 14 und 16) und dadurch eine Brücke bilden, auf der das Produkt P, das nicht ausgeschieden werden soll, an die weiterführende Fördervorrichtung 14 übergeben werden kann (siehe Figuren 15 und 16).

## Patentansprüche

1. Verpackungsmaschine, in der Produkte (P, P') in einer Reihe längs einer vorbestimmten Transportfläche bewegbar sind, mit einer Auswurfvorrichtung (10), in der ein vorbestimmtes Produkt (P') aus der Reihe entfernbar ist, wobei die Auswurfvorrichtung (10) zumindest ein Bodenteil (11) aufweist, das zwischen einer Funktionsstellung, in der das Bodenteil (11) einen Abschnitt der Transportfläche bildet, und einer Freigabestellung verstellbar ist, in der das Bodenteil (11) aus der Transportfläche herausbewegt ist, wobei das Bodenteil (11) eine drehangetriebene Scheibe (12) mit einem rotationsasymmetrischen Querschnitt ist, die um eine Drehachse (19) drehbar gelagert ist und wobei die Transportfläche eine 1. Fördervorrichtung (13) und eine daran anschließende 2. Fördervorrichtung (14) umfasst, wobei zwischen den Fördervorrichtungen (13, 14) eine Lücke (15) gebildet ist, in der die zumindest eine Scheibe (12) zumindest abschnittsweise angeordnet ist, **dadurch gekennzeichnet, dass** oberhalb der Lücke (15) eine Schubvorrichtung (20) angeordnet ist, mittels der auf ein darunter liegendes Produkt (P, P') eine in die Lücke (15) gerichtete Kraft aufbringbar ist.

2. Verpackungsmaschine nach Anspruch 1, **dadurch gekennzeichnet, dass** zwei Scheiben (12) auf Abstand nebeneinander angeordnet sind, die von entgegengesetzten Seiten in die Lücke (15) eingreifen.

3. Verpackungsmaschine nach Anspruch 2, **dadurch gekennzeichnet, dass** die Scheiben (12) in ihren Drehbewegungen synchronisiert sind.

4. Verpackungsmaschine nach einem der Ansprüche 1 bis 3, **dadurch gekennzeichnet, dass** die Scheibe (12) einsinnig drehangetrieben ist.

5. Verpackungsmaschine nach einem der Ansprüche 1 bis 4, **dadurch gekennzeichnet, dass** die Drehachse (19) normal zu derjenigen Oberfläche der Scheibe verläuft, die einen Abschnitt der Transportfläche bildet.

6. Verpackungsmaschine nach einem der Ansprüche 1 bis 5, **dadurch gekennzeichnet, dass** die Scheibe (12) nahe der Drehachse (19) einen Basisabschnitt (12a) aufweist, an den sich zumindest ein sich fächerartig radial nach außen erweiternder Abschnitt (12b) anschließt.

7. Verpackungsmaschine nach Anspruch 6, **dadurch gekennzeichnet, dass** die Scheibe (12) zwei fächerartige Abschnitte (12b) auf entgegengesetzten Seiten des Basisabschnitts (12a) aufweist.

8. Verpackungsmaschine nach einem der Ansprüche 1 bis 7, **dadurch gekennzeichnet, dass** die Schubvorrichtung (20) zumindest eine drehbar gelagerte Schubplatte (16) umfasst.

9. Verpackungsmaschine nach Anspruch 8, **dadurch gekennzeichnet, dass** die zumindest zwei Schubplatten (16) auf Abstand parallel nebeneinander angeordnet sind.

10. Verpackungsmaschine nach Anspruch 8 oder 9, **dadurch gekennzeichnet, dass** die Schubplatte (16) eine elliptische Form besitzt.

11. Verpackungsmaschine nach einem der Ansprüche 8 bis 10, **dadurch gekennzeichnet, dass** die Schubplatte (16) um eine Achse (17) drehbar ist, die senkrecht zur Transportrichtung (T) der Produkte (P) und senkrecht zu der Drehachse (19) der Scheibe (12) verläuft.

## Claims

1. Packaging machine in which products (P, P') can be moved in a row along a predetermined transporting surface, having a discharging apparatus (10), in which a predetermined product (P') can be removed from the row, wherein the discharging apparatus (10) has at least one base part (11) which can be adjusted between a functional position, in which the base part (11) forms a portion of the transporting surface, and a release position, in which the base part (11) is moved out of the transporting surface, wherein the base part (11) is a rotationally driven plate (12) with a rotationally asymmetrical cross section, the plate being mounted in a rotatable manner about a rotary spindle (19), and wherein the transporting surface comprises a first conveying apparatus (13) and a second conveying apparatus (14), adjoining the first, wherein a gap (15) is formed between the conveying apparatus (13, 14), and at least one plate (12) is arranged, at least in part, in said gap, **characterized in that** the gap (15) has arranged above it a pushing means (20), by way of which a product (P, P') located therebeneath can be subjected to a force directed into the gap (15).

2. Packaging machine according to Claim 1, **characterized in that** two plates (12) are spaced apart one beside the other and engage in the gap (15) from opposite sides.

3. Packaging machine according to Claim 2, **characterized in that** the rotary movements of the plates (12) are synchronized.

4. Packaging machine according to one of Claims 1 to 3, **characterized in that** the plate (12) is driven in rotation in one direction.

5. Packaging machine according to one of Claims 1 to 4, **characterized in that** the rotary spindle (19) runs normal to that surface of the plate which forms a portion of the transporting surface.

6. Packaging machine according to one of Claims 1 to 5, **characterized in that** the plate (12), in the vicinity of the rotary spindle (19), has a basic portion (12a), which is adjoined by at least one portion (12b) which widens radially outwards in a fan-like manner.

7. Packaging machine according to Claim 6, **characterized in that** the plate (12) has two fan-like portions (12b) on opposite sides of the basic portion (12a).

8. Packaging machine according to one of Claims 1 to 7, **characterized in that** the pushing means (20) comprises at least one rotatably mounted pushing plate (16).

9. Packaging machine according to Claim 8, **characterized in that** the at least two pushing plates (16) are spaced apart one beside the other and parallel to one another.

10. Packaging machine according to Claim 8 or 9, **characterized in that** the pushing plate (16) is elliptical.

11. Packaging machine according to one of Claims 8 to 10, **characterized in that** the pushing plate (16) can be rotated about a spindle (17) which runs perpendicularly to the transporting direction (T) of the products (P) and perpendicularly to the rotary spindle (19) of the plate (12).

## Revendications

1. Machine d'emballage dans laquelle des produits (P, P') peuvent être déplacés en ligne le long d'une surface de transport prédéfinie, avec un dispositif d'éjection (10) dans lequel un produit (P') prédéfini peut être retiré de la ligne, le dispositif d'éjection (10) comportant au moins une partie de plancher (11) pouvant être déplacée entre une position fonctionnelle dans laquelle la partie de plancher (11) forme une section de la surface de transport et une position de libération dans laquelle la partie de plancher (11) est déplacée hors de la surface de transport, la partie de plancher (11) étant un disque (12) entraîné en rotation doté d'une section transversale asymétrique en rotation disposée de façon à pouvoir tourner autour d'un axe de rotation (19), la surface de transport comprenant un 1^{er} dispositif de transport (13) et un 2^{nd} dispositif de transport (14) y étant raccordé, un interstice (15) dans lequel l'au moins un disque (12) est disposé au moins en partie étant formé entre les dispositifs de transport (13, 14) et **caractérisée en ce qu'**un dispositif de poussée (20) à l'aide duquel une force orientée dans l'interstice (15) peut être appliquée sur un produit (P, P') placé en dessous est disposé au-dessus de l'interstice (15).

2. Machine d'emballage selon la revendication 1, **caractérisée en ce que** deux disques (12) sont disposés côte à côte à une certaine distance l'un de l'autre, lesdits disques s'engrenant dans l'interstice (15) en partant des côtés opposés.

3. Machine d'emballage selon la revendication 2, **caractérisée en ce que** les disques (12) sont synchronisés dans leurs mouvements de rotation.

4. Machine d'emballage selon l'une quelconque des revendications 1 à 3, **caractérisée en ce que** le disque (12) est entraîné en rotation dans un sens unique.

5. Machine d'emballage selon l'une quelconque des revendications 1 à 4, **caractérisée en ce que** l'axe de rotation (19) s'étend perpendiculairement à la surface du disque formant une section de la surface de transport.

6. Machine d'emballage selon l'une quelconque des revendications 1 à 5, **caractérisée en ce que** le disque (12) comporte à proximité de l'axe de rotation (19) une section de base (12a) à laquelle est raccordée au moins une section (12b) s'élargissant en éventail vers l'extérieur dans le plan radial.

7. Machine d'emballage selon la revendication 6, **caractérisée en ce que** le disque (12) comporte deux sections (12b) en forme d'éventail sur les côtés opposés de la section de base (12a).

8. Machine d'emballage selon l'une quelconque des revendications 1 à 7, **caractérisée en ce que** le dispositif de poussée (20) comprend au moins une plaque de poussée (16) disposée de façon à pouvoir tourner.

9. Machine d'emballage selon la revendication 8, **caractérisée en ce que** les au moins deux plaques de poussée (16) sont disposées côte à côte, parallèlement et à une certaine distance l'une de l'autre.

10. Machine d'emballage selon la revendication 8 ou 9, **caractérisée en ce que** la plaque de poussée (16) prend une forme elliptique.

11. Machine d'emballage selon l'une quelconque des revendications 8 à 10, **caractérisée en ce que** la plaque de poussée (16) peut tourner autour d'un axe (17) s'étendant perpendiculairement à la direction de transport (T) des produits (P) et perpendiculairement à l'axe de rotation (19) du disque (12).
